# EUROPEAN PATENT SPECIFICATION

(11) **EP 1 893 702 B1**
(45) Date of publication and mention of the grant of the patent: **20.07.2011**
(21) Application number: 06758546.3
(22) Date of filing: 25.04.2006
(51) Int. Cl.: C09D 4/00, G11B 7/00

(54) **CURABLE COMPOSITION AND SUBSTRATES POSSESSING PROTECTIVE LAYER OBTAINED THEREFROM**
HÄRTBARE ZUSAMMENSETZUNG UND SUBSTRATE MIT DARAUS HERGESTELLTER SCHUTZSCHICHT
COMPOSITION DURCISSABLE ET SUBSTRATS POSSEDANT UNE COUCHE PROTECTRICE OBTENUS A PARTIR DE CELLE-CI

(30) Priority: 09.05.2005 US 678991 P; 08.12.2005 US 297729
(43) Date of publication of application: 05.03.2008
(73) Proprietor: SABIC Innovative Plastics IP B.V., 4612 PX Bergen Op Zoom OH (NL)
(72) Inventor: PAVESE, Karin, Ezbiansky, New York, New York 10017 (US); HILGERS, Christoph, 50226 Frechen (DE); LIAO, Wen, P., Clifton Park, New York 12065 (US); HAUBRICH, Jeanne, E., Clifton Park, New York 12065 (US); ARMSTRONG, Sean, E., East Greenbush, New York 12061 (US)
(74) Representative: Bublak, Wolfgang
(86) International application number: PCT/US2006/015487
(87) International publication number: WO 2006/121603

(56) References cited:
- US-B1- 6 355 703
- US-B1- 6 528 604

## Description

### CROSS REFERENCE TO RELATED APPLICATION

This application claims the benefit of U.S. provisional application Serial No. 60/678,991, filed May 9, 2005, the entire contents of which are incorporated by reference herein.

### BACKGROUND OF THE INVENTION

This invention relates to a curable composition and, in particular, to a heat and/or radiation-curable protective hardcoat composition for application to a substrate such as a high capacity optical information storage medium.

A new form of optical information storage medium, the so-called "Blu-ray" Disc (BD) technology, has only recently made its commercial appearance. At present, a Blu-ray optical information storage disc consists of a 1.1 mm substrate layer that is sputtered on one side with a metal or metal alloy as a reflective layer, a thin information layer (for BD-ROM), a recordable layer (for BD-R) or a re-recordable layer (for BD-RE) and, finally, a 100 micron protective topcoat, or cover, layer. The cover layer consists of a relatively expensive solvent-casted polycarbonate (PC) film of approximately 100 microns thickness bonded via an adhesive to the information layer, recordable layer or re-recordable layer, as the case may be, of the substrate. Because this PC film readily scratches and acquires fingerprints, the current commercial version of the Blu-ray Disc is enclosed within a protective cartridge, a component that adds significantly to the cost of the product. The information, recordable or re-recordable layer of a Blu-ray disc is only about 100 microns below its surface therefore thus requiring increased surface integrity compared to that which is acceptable for a conventional compact disc (CD) or digital versatile disc (DVD) surface.

Efforts are currently being made to replace the protective cartridge of a Blu-ray Disc with a protective coating on the disc and even to replacing the PC film used as the cover layer with a lower cost but still effective substitute. PC film is not only an expensive material, it is difficult to assemble in the disc manufacturing process. One approach being considered to improve the Blu-ray Disc technology consists of a 2-layer spincoatable system where a first 94-98 micron layer is spun onto the information-containing 1.1 mm substrate followed by a second 2-6 micron layer hardcoat which provides abrasion resistance and anti-fingerprint, properties.

Given the inherent complexities of a 2-layer spincoatable system it would be highly desirable to combine the two coating operations into a single coating step employing a single coating composition that effectively combines all of the functions of the aforementioned two-coat system.

Abrasion resistance and scratch resistance can in general be achieved with highly crosslinked resins. However, most organic resins shrink upon polymerization. Shrinkage of the cover layer upon curing creates stress between it and the substrate to which it is applied. This stress in turn can create what is referred to as disc tilt. Because of the miniaturization of the information pits and the necessary precision requirement of the laser light, particularly in the case of Blu-ray media, excessive disc tilt must be avoided.

### BRIEF DESCRIPTION OF THE INVENTION

In accordance with the present invention, there is provided a curable composition which comprises:
a) silano-functionalized colloidal silica;
b) at least one curable monomer selected from the group consisting of aliphatic cyclic acrylate, urethane diacrylate and epoxy resin; and,
c) at least one curing agent for curable monomer (b), wherein the epoxy resin is combined with one or more monofunctional and/or multifunctional alcohols which contain an oxetane ring

When applied to a substrate and cured, the composition of this invention provides a scratch and abrasion resistant, anti-fingerprint hardcoat layer which is especially advantageous for application to the thermoplastic substrate component of a Blu-ray optical information storage medium. When applied to such a medium as a protective cover layer, or hardcoat, the cured coating composition of this invention not only provides the aforementioned properties of scratch and abrasion resistance and anti-fingerprint capability on the media surface, it exhibits low shrinkage and very little tilt upon curing.

While the curable coating composition of this invention is particularly well suited for providing the protective layer of a high capacity optical information storage medium, it is not limited to this application, but can be utilized to provide a durable, highly scratch and abrasion resistant coating for numerous other materials and articles.

### BRIEF DESCRIPTION OF THE DRAWINGS

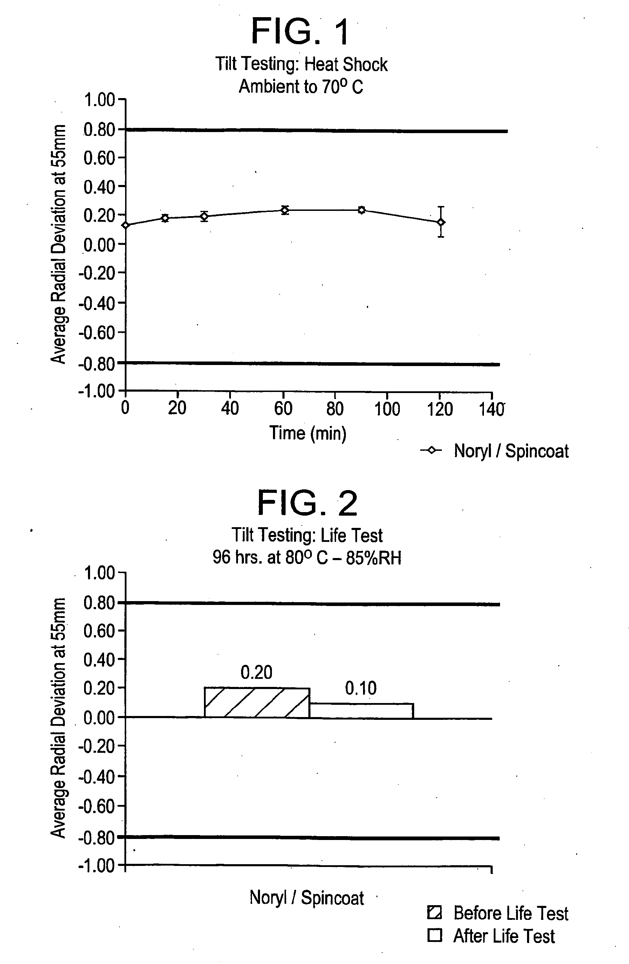

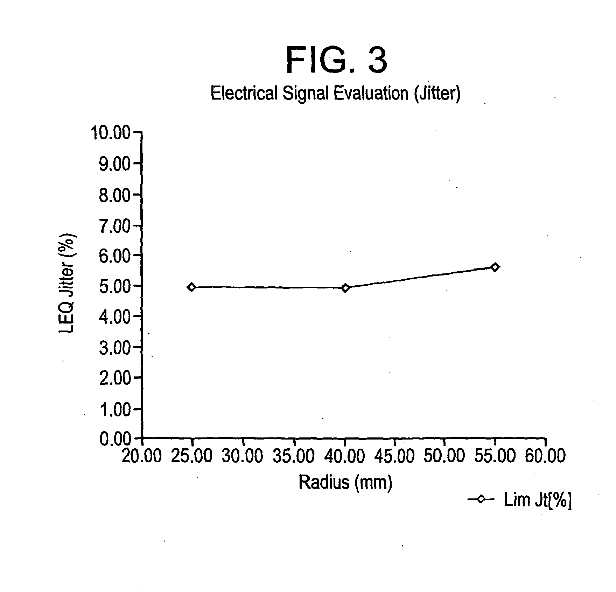

Figs. 1-3 present the results of various tests carried out upon a disc possessing a cured cover layer obtained from a curable composition in accordance with the invention.

### DETAILED DESCRIPTION OF THE INVENTION

The curable composition of the invention is obtained by first providing a functionalized colloidal silica. The functionalized colloidal silica is advantageously obtained by reacting a functionalizing silane with a fmely divided colloidal silica. The functionalized colloidal silica is thereafter combined with at least one monomer and cured as hereinafter described to provide the cured composition of the invention.

The expression "functionalized colloidal silica" as used herein shall be understood to mean a colloidal silica which, by having been rendered hydrophobic, becomes compatible with the curable monomer(s) with which it is admixed to provide the curable composition of the invention, the compatibilization being achieved by chemically reacting the colloidal silica with a silane, referred to herein as a "functionalizing silane", which produces this result. As a result of having been obtained from the reaction of colloidal silica with functionalizing silane, the resulting functionalized colloidal silica component of the curable composition herein may be made to possess organic moieties bonded to the surface of the silica particles that are either essentially chemically inert, are chemically reactive, e.g., acrylate or epoxy groups, or present both types.

Colloidal silica is commercially supplied as a dispersion of nano-sized silica (SiO₂) particles in an aqueous or other solvent medium. The colloidal silica contains up to about 85 weight percent silicon dioxide (SiO₂) and typically up to about 80 weight percent silicon dioxide. The nominal median particle size of the colloidal silica is typically in a range of from 1 to 250 nanometers (nm) which, for this invention, advantageously does not exceed about 50 nm and more advantageously does not exceed about 25 nm.

Silanes useful for functionalizing colloidal silica include those of the general formula:

(R¹)ₐSi(OR²)₄₋ₐ

wherein each R¹ is, independently, a monovalent hydrocarbon group of up to 18 carbon atoms which can contain chemically reactive functionality such as acrylate or epoxide functionality, a vinyl group or an allyl group, and each R² is, independently, a monovalent hydrocarbon radical of up to 18 carbon atoms and "a" is a whole number of from 1 to 3,

Silanes that can be used for functionalizing colloidal silica include phenyltrimethoxysilane, methyltrimethoxysilane, vinyltrimethoxysilane, the allyldialkylsilanes disclosed in U.S. Patent No. 5,420,323 and the beta-substituted allylsilanes disclosed in U.S. Patent No. 4,898,959, the contents of both of which are incorporated by reference herein. 2-(3,4-epoxycyclohexyl)ethyltrimethoxy-silane, 3-glycidoxypropyltrimethoxy-silane, 3-acryloxypropylmethyldiethoxy-silane, 3-acryloxyproplymethyldimetboxy-silane. 3-acryloxypropyltrimethoxy-silane, 2-methacryloxethylmethyldisthoxy-silane, 2-methacryloxyethyl-methyldimethoxy-sillane, 2-methacryloxethyltri-methoxysilane, 2,acryloxyethyltri-methoxysilane, 3-methylacryloxypropyl, 3-methacryloxypropyl-triethoxysilane, 3-acryloxypropyltriethoxysilane, 3-acryloxypropyl-dimethylethoxysilane, 2-methacryloxyemyltri-ethoxysilane, 2-acryloxythyl-triethosxysilane, and the like. A combination of functionalities can be obtained by employing two or more silanes each possessing a different functionality such as acrylate and epoxy, allyl and epoxy, etc.

In general, the colloidal silica can be reacted with from about 5 to about 60 weight percent based thereof of functionalizing silane(s). If desired, the resulting functionalized colloidal silica can be treated with an acid or base to neutralize its pH. An acid or base as well as other catalysts promoting condensation of the silanol groups on the silica particles and the alkoxysilane group(s) on the silane(s) can be used to facilitate the functionalization process. Such catalysts include organotitanium and organotin compounds such as tetrabutyl titanate, titanium isopropoxybis(acetylacetonate), dibutyltin dilaurate, etc., and combinations thereof.

In one embodiment, the functionalization of the colloidal silica can be carried out by adding the functionalizing silane(s) to a commercially available aqueous dispersion of colloidal silica in the weight ratio described above to which an aliphatic alcohol has been added. The resulting composition comprising the colloidal silica and the functionalizing silane(s) in the aliphatic alcohol will be referred to herein as a pre-dispersion. The aliphatic alcohol can be selected from, e.g., isopropanol, t-butanol, 2-butanol methoxypropanol, etc., and combinations thereof. The aliphatic alcohol(s) can be present in an amount of from about 1 to about 10 times the weight of the colloidal silica. In some cases, one or more stabilizers such as 4-hydroxy-2,2,6,6-tetramethylpiperdinyloxy (i.e. 4-hydroxy TEMPO) can be added to this pre-dispersion. In some instances, small amounts of acid or base can be added to adjust the pH of the pre-dispersion. The resulting pre-dispersion is typically heated in a range between about 50° C. and bout 120° C. for a period of from about 1 hour to about 5 hours to effect the reaction of the silane with the silica thereby providing the functionalized colloidal silica.

The cooled pre-dispersion is then further treated to provide a final dispersion of the functionalized colloidal silica by addition of at least one curable monomer which is an aliphatic cyclic acrylate, urethane diacrylate or epoxy resin, and optionally, additional aliphatic solvent which can be selected from, but not limited to, isopropanol, 1-methoxy-2-propanol, 1-methoxy-2-propyl acetate, toluene, etc., and combinations thereof, wherein the epoxy resin is combined with one or more monofunctional and/or multifunctional alcohols which contain an oxetane ring. This final dispersion of the functionalized colloidal silica can be treated with acid or base or with an ion exchange resin to remove acidic or basic impurities, as the case may be. This final dispersion of the functionalized colloidal silica is then concentrated under a vacuum of from about 0.5 Torr to about 250 Torr and at a temperature of from about 20° C. to about 140° C. to remove low boiling materials such as solvent, residual water, etc., the thus-treated concentrated dispersion being referred to herein as a final concentrated dispersion.

If desired, the pre-dispersion or the final dispersion of the functionalized colloidal silica can be further functionalized. In this embodiment, low boiling components are at least partially removed and, subsequently, an appropriate capping agent that will react with residual silanol groups on the surface of the functionalized colloidal silica particles is added to the dispersion in a suitable amount, e.g., from about 0.05 to about 10 times the amount of silica present in the pre-dispersion or final dispersion. Partial removal of low boiling components refers to the removal of at least about 10 weight percent of the total mount of low boiling components, and advantageously, at least about 50 weight percent of the total amount of low boiling components. An effective amount of capping agent caps the functionalized colloidal silica, the capped functionalized colloidal silica being defined herein as a functionalized colloidal silica in which at least about 10 percent, advantageously at least about 20 percent, more advantageously at least about 35 percent, of the free silanol groups present in the corresponding uncapped functionalized colloidal silica have been functionalized by reaction with capping agent. Capping the functionalized colloidal silica effectively can improve the cure of the total curable composition. Formulations which include the capped functionalized colloidal silica typically show better room temperature stability than analogous formulations in which residual silanol groups on the surface of the colloidal silica have not been capped.

Suitable capping agents include hydroxyl-reactive materials such as silylating agents. Examples of a silylating agent include, but are not limited to, hexamethyldisilazane (HMDZ), tetramethyldisilazane, divinyltetramethyl-disilazane, diphenyltetramethyldisilazane, N-(trimethylsilyl)diethylamine, 1-(trimethylsilyl)imidazole, trimethylchlorosilane, pentamethylchlorodisiloxane, pentamethyldisiloxane, etc., and combinations thereof. The transparent dispersion is then heated in a range of from about 20° C. to about 140° C. for a period of time ranging from about 0.5 hours to about 48 hours. The resultant mixture is then filtered. If the pre-dispersion was reacted with capping agent, the curable monomer referred to above is added to form the final dispersion. The mixture of functionalized colloidal silica and curable monomer(s) is concentrated at a pressure of from about 0.5 Torr to about 250 Torr to form the final concentrated dispersion. During this process, lower boiling components such as solvent, residual water, byproducts of the capping agent, excess capping agent, and the like, are substantially removes

Following the preparation of the functionalized colloidal silica, at least one curable monomer selected from the group consisting of aliphatic cyclic acrylate, urethane acrylate, epoxy resin and at least one curing agent for the aforesaid monmer(s) wherein the epoxy resin is combined with one or more monofunctional and/or multifunctional alcohols which contain an oxetane ring, is added thereto to complete the curable composition of the invention.

In one embodiment, the aliphatic cyclic acrylate monomer can be a tricyclodecane diacrylate of the general formula: 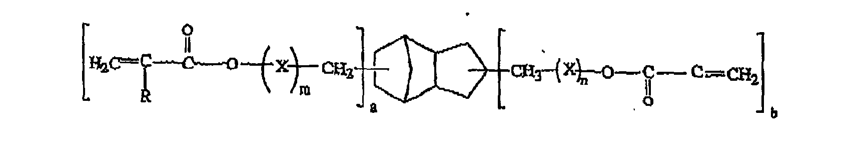 wherein R is H or alkyl of from 1 to 4 carbon atoms, a is 1 to 3, b is 1 to 3, m is 0 to 6, n is 0 to 6 and X is a spacer group selected from one or more of the following: 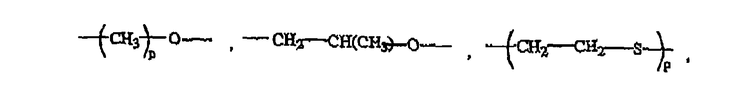 or derivatives there in which p is 1 to 4.

Specific tricyclodecane dicrylates that can advantageously be employed herein include those of the structure: 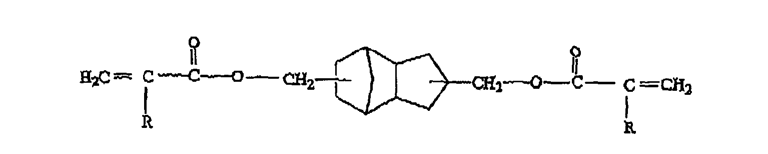 wherein each R is H or -CH₃.

Other aliphatic cyclic acrylates that can be utilized herein include cyclohexylacrylate, cyclohexylmethacrylate, cyclohexyldiacrylate, cyclohexyldimethacrylate, norbornyl acrylate, norbornyl methacrylate, norbornyl methacrylate, norbornyl dimethacrylate, and the like.

The urethane diacrylates are the reaction produces of isocyanate-terminated polyurethanes derived from polyether or polyester diols and active hydrogencontaining acrylates such as the hydroxyl-terminated acrylates. Thus, e.g., urethane diacrylates can be obtained by reacting a polyether diol with a diisocyanate such as isophorone diisocyanate to provide a linear polyurethane capped with isocyanate groups and thereafter reacting this product with a hydroxyl group-containing acrylate such as hydroxyethylacrylate or hydroxyethylmethacrylate. A number of urethane diacrylates, diluted with low viscosity acrylates to reduce their viscosities, are commercially available. Included among these urethane acrylates are Ebecryl 230 (aliphatic urethane diacrylate having a viscosity of about 40,000 cps), Ebecryl 244 (aliphatic urethane diacrylate diluted 10 weight percent with 1,6-hexanediol diacrylate), Ebecryl 284 (aliphatic urethane diacrylate diluted 10 weight percent with 1,6-hexanediol diacrylate), commercially available from UCB Chemicals, CN-963A80 (aliphatic urethane diacrylate blended with 20 weight percent tripropylene glycol diacrylate), CN-966A80 (aliphatic urethane diacrylate blended with 20 weight percent tripropylene glycol diacrylate), CN-982A75 (aliphatic urethane diacrylate blended with 25 weight percent tripropylene glycol diacrylate) and CN-983 (aliphatic urethane diacrylate), all available from Sartomer Corp. Of the foregoing, Ebecryl 230 is especially advantageous for use herein.

Curable epoxy resins that are suitable for use herein include any of those containing at least one epoxide functionality and, advantageously those containing more than one epoxides functionality. Examples of such epoxides include glycidyl esters of mono-and dicarboxylic acids, alkyl glycidyl ethers such as butyl glycidyl ether, phenylglycidyl ether, 2-ethylhexyl glycidyl ether, 3-cyclohexenylmethyl-3-cyclohexenylcarboxylate diepoxide, 2-(3,4-epoxy)cyclohexyl-5,5-spiro-(3,4-epoxy)cyclohexane-m-dioxane, 3,4-epoxycyclohexylmethyl-3,4-epoxycyclohexanecarboxylate, 3,4-epoxy-6-methycyclohexylmethyl-3,4-epoxy-6-methylcyclohexanecarboxylate, vinyl cyclohexanedioxide, bis(3,4-epoxycyclohexylmethyl)adipate, bis(3,4-epoxy-6-methylcyclohexylmethyl)adipate, exo-exo bis(2,3-epoxycyclopentyl) ether, endo-exo bis(2,3-epoxycyclopentyl) other, 2,2-bis(4-(2,3-epoxypropoxy)cyclohexyl)propane, 2,6-bis(2,3-epoxypropoxycyclohexyl-p-dioxarte), 2,6-bis(2,3-epoxypropoxy)norbornene, the diglycidylether of linoleic acid dimer, limonene dioxide, 2,2-bis(3,4-epoxycyclohexyl)propane, dicyclopentadiene dioxide, 1,2-epoxy-6-(2,3-epoxypropoxy)hexahydro-4,7-methanoindane, p-(2,3-epoxy)cyclopentylphenyl-2,3-epoxypropylether, 1-(2,3-epoxypropoxy)phenyl-5,6-epoxy-hexadydro-4,7-methanoindane, o-(2,3-epoxy)cyclopentylphenyl-2,3-epoxypropyl ether), 1,2-bis(5-(1,2-epoxy)-4,7-hexahydromethanoindanoxyl)ethane, cyclopentenylphenyl glycidyl ether, cyclohexanediol diglycidyl ether, diglycidyl hexahydrophthalate, diglycidyl ethers of bisphenol A and bisphenol F, alkyl glycidyl ethers; alkyl- and alkenyl-glycidyl esters; alkyl-, mono- and poly-phenol glycidyl ethers; polyglycidyl ethers of pyrocatechol, resorcinol, hydroquinone, 4,4'-dihydroxydiphenyl methane, 4.4'-dihydroxy-3,3'-dimethyldiphenyl methane. 4,4'-dihydroxydiphenyl dimethyl methane, 4,4'-dihydroxydiphenyl methyl methane, 4,4'-dihydrozydiphenyl cyclohexane, 4,4'-dihydroxy-3,3'-dimethyldiphenyl propane. 4,4'-dihydroxydiphenyl sulfone, and tris(4-hydroxyphyenyl)methane; polyglycidyl ethers of the chlorination and bromination products of the above-mentioned diphenols; polyglycidyl ethers of novolacs; polyglycidyl ethers of diphenols obtained by esterifying ethers of diphenols obtained by esterifying salts of an aromatic hydrocarboxylic acid with a dihaloalkane or dihalogen dialkyl ether; polyglycidyl ethers of polyphenols obtained by condensing phenols and long-chain halogen paraffins containing at least two halogen atoms; phenol novolac epoxy resin; cresol novolac epoxy resin, sorbitol glycidyl ether, and the like.

The epoxy resin (s) is (are) combined with one or more monofunctional and/or multifunctional alcohols to further reduce disc tilt. Monofunctional alcohols include those containing up to 30 carbon atoms, e.g., lower alcohols such as ethanol, propanol, isopropanol, sec-butanol, tert-butanol, etc., and fatty alcohols such as lauryl alcohol, stearyl alcohol, etc., provided they are soluble in the curable composition Multifunctional alcohols such as castor oil and the polyols are also useful for this purpose. The type of alcohol is one containing an oxetane ring. Cationic ring opening of the epoxide groups with the alcohol group of the oxetane has been found to minimize tilt. Included among the useful oxetanes are 3-hydroxymethyl-3-methyloxetane, 3-hydroxymethyl-3-ethyloxetane, 3-hydroxymethyl-3-amyloxetane, 3-hydroxymethyl-3-phenoxymethyloxetane, 3-hydroxymethyl-3-p-tert.-phenoxymethyloxetane, 3-hydroxymethyl-3-octyloxetane, 3-hydroxymethyl-3-benzyloxetane, and the like.

Certain weight ratios of epoxy resin to oxetane will provide especially good results. These ratios can be readily determined for a specific coating composition employing routine experimentation. For example, the ratio for a curable composition containing 3-hydroxymethyl-3-ethyloxetane and 3-4-epoxycyclohexylmethyl-3,4-epoxycyclohexanecarboxylate can be maintained at a minimum of 0.6 and advantageously at 1.

The foregoing monomers can be present at a level of from about 0.1 to about 20 weight percent, advantageously from about 1 to about 15 weight percent and more advantageously from about 2 to about 10 weight percent, based on the total weight of curable coating composition.

While the curable coating composition of the present invention will provide a hardcoat film at ambient conditions, optimum results are achieved by the application of heating and/or the use of a free radical curing agent. The coating composition can be cured by a free radical generator, such as ultraviolet light, electron beam or gamma radiation, or chemical free radical generators such as azo compounds and peroxides. The coating composition can be ultraviolet light-cured if one or more photoinitiators is added prior to curing. There are no special restrictions on the photoinitiators as long as they can generate radicals by the absorption of optical energy. Ultraviolet light sensitive photoinitiators or blends of initiators used in the UV cure of the present composition include 2-hydroxy-2-methyl-1-phenyl-propan-1-one (Darocur 1173, Ciba Specialty Chemicals) and 2.2 dimethoxy-2-phenyl-acetol-phenons (Irgacure 651, Ciba Specialty Chemicals).

Additional curing agents include onium catalysts such as bisaryliodonium salts (e.g. bis(dodecylphenyl)iodonium hexafluoroantimonate, (octyloxyphenyl, phenyl)iodonium hexafluoroantimonate, bisaryliodonium tetrakis(pentafluorophenyl) borate), triarylsulphonium salts, and combinations thereof. Preferably, the catalyst is a bisaryliodonium salt. Optionally, an effective amount of a free-radical generating compound can be added as the optional reagent such as aromatic pinacols, benzoinalkyl ethers, organic peroxides, and combinations thereof. The free radical generating compound facilitates decomposition of onium salt at lower temperature.

Also useful herein as curing agents for epoxy resin monomer(s) are the superacid salts, e.g., the urea-superacid salts disclosed in U.S. Patent No. 5,278,247, the entire contents of which are incorporated by reference herein.

In general, from about 0.05 to about 5 weight percent based on the total solids in the composition of the foregoing curing agents will cause the composition herein to cure.

The following examples are illustrative of the invention.

### Examples 1-3: Comparative Examples 1-3

Examples 1-3 demonstrate the preparation of curable compositions in accordance with the invention, their application to discs fabricated from PC (GE OQ1030) and (GE Noryl^{®}: blend of polyphenylene oxide (PPO) and polystyrene (PS)) and their subsequent curing to provide hardcoat layers on the discs.

Comparative Examples 1-3 are provided for comparison purposes and demonstrate that hardcoat layers prepared from urethane acrylates possessing more than two acrylate functionalities will be so highly crosslinked upon curing as to result in cracking of the layers.

The observation of cracking upon cure or bending of a disc was recorded. The abrasion resistance was measured following the conventional steel wool test. This test requires 11 back-and-forth rubs using a piece of steel wool (#0000) attached to the bottom of a 1 kg weight. The operator observes for scratches on the surface. In some case, the Pencil Hardness testing according ASTM test D3363 was also carried out. Typical cure conditions used a Fusion D or H bulb with a set intensity ranging between 0.384- 2.8 W/cm² and a dosage of 0.304-2 J/cm² or Xenon Flash Bulb. A typical spin coat conditions included a spin rate of about 500-3000 rpm for 1-30 seconds to yield an approximately 100 micron thick coating.

### Example 1

A mixture containing 365 g of isopropanol, 260 g of Nalco 1034 colloidal silica, 0.20g of 4-hydroxy-TEMPO, and 39 g of methacryloxypropyltrimethoxy silane was refluxed for 3 hours while stirring to functionalize the colloidal silica (referred to herein as FCS 100) and provide a pre-dispersion. The pre-dispersion was cooled to ambient temperature at which point 180 g of Dowanol PM and 116 g of tricyclodecane dimethanol diacrylate monomer (SR833S from Sartomer) were added to provide a final dispersion. The final dispersion was gently heated to about 80°C and placed on a rotavap. The isopropanol, water, and Dowanol PM were removed under a vacuum of less than 10 mm Hg to provide a concentrated final dispersion. Gas chromatographic analysis confirmed the disappearance of the volatiles therefrom. The viscosity of approximately 2000 cps for shear rates of 10-100 1/s was measured on a TA Instrument Carri-Med Rheometer CSL²₅₀₀. The addition of a photoinitiator, Darocur 1173, was completed. 100 micron coatings were prepared on discs with both Noryl^{®} and PC as substrates.

### Examples 2 and 3, Comparative Examples 1-3

In substantially the same manner as described above, curable compositions were prepared with a urethane diacrylate (Ebecryl 230), which is within the scope of the invention (Examples 2 and 3), and urethane acrylates possessing more than two acrylate functionalities and as such outside the scope of the invention (Comparative Examples 1-3). The curable compositions of these examples were applied to the discs followed by their curing substantially as described above.

The wt. % of FCS 100 and curable monomer in each curable composition, and the test results for the coated discs of Examples 1-3 and Comparative Examples 1-3 are presented below in Table 1.

**Table 1: Test Results for 100 Micron Coated Discs**

| Coating Solution** | Viscosity | Coating Thickness (µ) | Cracking | Steel Wool | Pencil Hardness |
|---|---|---|---|---|---|
| Example 1 | 2000 cps @ 20 1/s, 25°C | 100* | No | pass | 8H |
| Example 2: 50% Ebecryl 230:50% FCS100 | 1700 cps @20 1/s, 25 °C | 106.2 | No | fail | 2H |
| Example 3: 50% Ebecryl 230:50% FCS 100 | - | 100* | No | fail | - |
| Comparative Example 1: 64% urethane acrylate possessing an average of six acrylate functionalities 20% FCS100 | 3058 cps @ 100 1/s, 25 °C | 78.34 | Yes | pass | - |
| Comparative Example 2: 50% urethane acrylate possessing an average of five acrylate functionalities: 50%FCS100 | 2706 cps @ 100 1/s, 25°C | 71.53 | Yes | pass | - |
| Comparative Example 3: 80% urethane acrylate possessing an average of four acrylate functionalities: 20% FCS100 | 750 cps @ 100 1/s, 25°C | 76.75 | Yes | fail | - |

| | | | | | |
|---|---|---|---|---|---|
| *Thickness measured by micrometer. All amounts are in wt.%. ** All coating solutions contain Darocur 1173 photoinitiator. Examples 2, 3 and Comparative Examples 1-3 also contain a surfactant and phenyl(methylbenzoyl)phosphineoxide (TPO) as a second photoinitator | | | | | |

As these data show, the hardcoats that were prepared with curable monomers within the scope of the invention, i.e., Example 1 illustrating the use of an aliphatic cyclic acrylate monomer and Examples 2 and 3 illustrating the use of a urethane diacrylate monomer, all provided crack-free coatings. As between these examples, the test data indicate a preference for the hardcoat of Example 1 which is not only free from cracking but possesses superior abrasion-resistance (Steel Wool test) and hardness properties (Pencil Hardness) compared to these properties for the hardcoats of Examples 2 and 3.

The hardcoats prepared with the higher functionality urethane acrylates of Comparative Examples 1-3 all experienced cracking following cure indicating their unacceptability for use in the fabrication of protective coatings.

### Example 4

To a 2 liter 5-neck flask equipped with a thermometer, a condenser, an addition funnel, an overhead stirrer, and a nitrogen inlet was charged 300 g aqueous colloidal silica (Nyacol 2034DI from Akzo Nobel) containing 34 wt.% SiO₂ in water, 300 g methoxypropanol, and 5 g phenyl trimethoxysilane. The mixture was heated to 80°C under nitrogen for 2 hours. An aliquot of 0.5 g of triethylamine was added and the mixing continued at 80°C for another 1 hour. While a total of 360 g of methoxypropanol was continuously added to the batch, the mixture was heated to distill water off until the batch temperature reached 110°C. The batch (designated FCS-A) was cooled to 90°C and 0.5 g trimethylamine and 15 g hexamethyltrisilazane were added. The batch was subsequently heated back to reflux at 110°C for 1 hour. Nitrogen flow was discontinued and a slight vacuum was applied to distill off about 50 g solvents. The batch was cooled to 40°C and charged with 89.1 g 3,4-epoxycyclohexylmethyl-3,4-epoxycyclohexane-carboxylate (Cyracure^{™} UVR6105 from Dow Chemical) and 29.7 g bisphenol F diglycidyl ether (RSL1739 from Resolution Performance). After the epoxy resins were completely dissolved, vacuum was applied to distill off solvents. The batch was gradually heated up to 120°C at full vacuum of 13 mmHg and maintained at these conditions for 0.5 hour to completely remove volatiles.

### Example 5

The same procedure and charges as Example 4 were used except for the use of Nalco 1034A colloidal silica from Nalco Company and heating the batch (designated FCS-B) to 90°C instead of 110°C in the final vacuum distillation.

### Example 6

The same procedure and charges as Example 5 were used except that 0.5g of phenyltrimethoxysilane was replaced with 0.5 g of gammaglycidoxypropyltrimethoxysilane and nitrogen was not employed (resulting batch designated FCS-C).

### Examples 7-11

Various amounts of UVR6000 (3-ethyl-3-hydroxymethyloxetane) and UVI 6992, a sulfonium cationic photoinitiator from Dow Chemical, were mixed with FCS-A from Example 4. The mixtures were spincoated on OQ1030 discs. The test results for Pencil Hardness and Table Tilt are presented below in Table 2. Table tilt decreased as the level of UVR6000 increased.

**Table 2: Pencil Hardness and Table Tilt Test Results**

| Example | 7 | 8 | 9 | 10 | 11 |
|---|---|---|---|---|---|
| FCS-A | 91.15 | 87.16 | 80.74 | 73.75 | 68.09 |
| UVR6000 | 4.83 | 9.00 | 15.70 | 23.00 | 28.91 |
| UVI6992 | 4.02 | 3.84 | 3.56 | 3.25 | 3.00 |
| Total | 100 | 100 | 100 | 100 | 100 |
| UVR6000/UVR6105 | 0.106 | 0.207 | 0.389 | 0.624 | 0.849 |
| Thickness, micron | 130 | 110 | 65 | 50 | 40 |
| Pencil Hardness | 7H | 6H | 7H | 6H | 7H |
| Table Tilt, degrees | 2.3 | 2.6 | 1.6 | 0.1 | 0 |

### Example 12

The use of a multifunctional alcohol, castor oil, is illustrated in this example. The coating composition was prepared by mixing 18.63 g of the coating composition of Example 5 (FCS-B), an epoxy mixture containing functionalized colloidal silica, 8.93 g UVR6105, 4.01 g castor oil, 2.7 g 1-pentanol and 2.19g UVI6992. The cured coating on OQ1030 discs had a Pencil Hardness of 7H.

### Example 13

Reactive functionalized colloidal silica prepared partially with gammaglycidoxypropyltrimethoxysilane, Example 6 (FCS-C), was used in this example. The coating composition was prepared by mixing 68.15 g of Example 5 (FCS-B), 28.72 g UVR6105, and 3.14 g UVI6992. The cured coating on OQ1030 discs had a Pencil Hardness of 9H and the coated disc had a slightly positive Table Tilt.

### Example 14

To a 2 liter 3-neck flask equipped with a thermometer, a condenser, and an addition funnel was charged 600 g aqueous colloidal silica (Nyacol 2034DI from Akzo Nobel), containing 34 wt.% SiO₂ in water, 600 g methoxypropanol, and 10.2 g phenyl trimethoxysilane. The mixture was heated to 80°C under nitrogen for 2 hours. An aliquot of 1 g of triethylamine was added and the mixing continued at 80°C for another 1 hour. While a total of 720g of methoxypropanol was continuously added to the batch, the mixture was heated to distill water off until the batch temperature reached 110°C. The batch was cooled to 90°C and 1 g trimethylamine and 30 g hexamethyltrisilazane were added. The batch was subsequently heated back to reflux at 110°C for 1 hour. A slight vacuum was applied to distill off about 80g solvents. The batch was cooled to 40°C and charged with 140 g 3,4-epoxycyclohexylmethyl-3,4-epoxycyclohexanecarboxylate (Cyracure^{™} UVR6105 from Dow Chemical). After the epoxide was completely dissolved, vacuum was applied to distill off solvents. The batch was gradually heated to 120°C, 15mmHg and maintained at these conditions for 0.5 hour to completely remove volatiles. The batch was cooled to 40°C and charged with 138.05 g 3-ethyl-3-hydroxymethyloxetane (Cyracur^{™} UVR6000 from Dow Chemical) and 16.2 g acrylate polyol (Joncryl 587 from Johnson Polymer). The batch was mixed until the acrylate polyol completely dissolved therein. A total of 21.56 g photoinitiator UVI6976 from Dow Chemical was added and mixed until completely dissolved therein. The mixture had a viscosity of 2480 cps at 25°C.

The coating composition was spincoated on aluminum-sputtered OQ1030 discs and Noryl^{®} discs and cured using Fusion UV D lamp. The thickness of the cured coating was about 100 micrometers. Pencil hardness of the cured coatings were 7H and average delta alpha radial deviations, measured by subtracting the alpha radial deviation of the disc before coating from the radial deviation of the disc after curing, were 0.85 and -0.05 for coatings on OQ1030 and Noryl^{®}, respectively.

### Examples 15-26

The contact angle of deionized water on the cured coating of Example 13 was 68 degrees. Examples 15-26 show the increase of contact angle of the cured coatings that were modified with various silicone and fluoro surfactants as shown in Tables 3 and 4 below.

**Table 3**

| Example | 15 | 16 | 17 | 18 | 19 | 20 | 21 |
|---|---|---|---|---|---|---|---|
| CoatOsil¹ | 3503 | 3509 | 2810 | 3500 | 2812 | 3505 | 3573 |
| Surfactant amount | 9.08 | 1.10 | 1.01 | 1.82 | 1.03 | 1.19 | 1.64 |
| Example 10 | | | | | | | |
| formula | 90.92 | 98.90 | 98.99 | 98.18 | 98.97 | 98.81 | 98.36 |
| Total | 100 | 100 | 100 | 100 | 100 | 100 | 100 |
| Contact angle, deg | 101.2 | 106.4 | 98.4 | 106.6 | 104.85 | 92.85 | 105.1 |

| | | | | | | | |
|---|---|---|---|---|---|---|---|
| ^{1,2} CoatOsil and Silwet are silicones from GE Advanced Materials. | | | | | | | |

**Table 4**

| Example | 22 | 23 | 24 | 25 | 26 |
|---|---|---|---|---|---|
| Surfactant type | Silwet² L-7510 | Silwet² L-7550 | Silwet² L-7280 | FC4430³ | FC4432³ |
| Surfactant amount | 0.85 | 1.08 | 1.14 | 1.01 | 1.39 |
| Example 1 | | | | | |
| formula | 99.15 | 98.92 | 98.86 | 98.99 | 98.61 |
| Total | 100 | 100 | 100 | 100 | 100 |
| | | | | | |
| Contact angle, deg | 99.1 | 87 | 83.55 | 96.95 | 109.1 |

| | | | | | |
|---|---|---|---|---|---|
| ^{1,2} CoatOsil and Silwet are silicones from GE Advanced Materials. ³ Fluorad FC4430 and Fluorad FC4432 are fluoro surfactants from 3M. | | | | | |

### Example 27

A suspension containing 50 wt. % Ebecryl 230 urethane diacrylate and 50 wt. % FCS 100 diluted in hexanedioldiacrylate was prepared. The addition of approximately 9 wt. % Darocur 1173 and 0.3 wt. % of BYK300 as a surfactant was completed. The suspension was stirred prior to coating. 100 micron coatings were prepared on discs with both Noryl^{®} and PC as substrates. The suspension is identified in Table 5 below as "Susp-A".

### Example 28

A suspension containing 50 wt. % of Sol A from Example 27 and 50 wt. % of FCS 100 in 50 wt.% tricyclodecane dimethanol diacrylate (SR833S from Sartomer) was prepared. The addition of 9 wt. % Darocur 1173 and 0.3 wt. % of BYK300 as a surfactant was completed. The suspension was stirred prior to coating. 100 micron coatings were prepared on discs with PC and Noryl^{®} as the substrates. The composition is identified in Table 5 below as "Susp-B".

### Example 29

A suspension containing 85 wt. % of Sol A from Example 27 and 15 wt. % of FCS 100 in tricyclodecane dimethanol diacrylate from Example 28. The addition of 9 wt. % Darocur 1173 and 0.3 wt. % of BYK300 as a surfactant was completed. The suspension was stirred prior to coating. 100 micron coatings were prepared on discs with both PC and Noryl^{®} as the substrates. The composition is identified in Table 5 below as "Susp-C".

The results of the tilt and pencil hardness tests, carried out as previously described, are presented in Table 5 as follows:

**Table 5: Tilt and Pencil Hardness Test Results**

| Coating Solution | Viscosity *** (cps@ 20 1/s, 25°C) | Coating Thickness (µ) (average of 5) | Tilt change post coating and curing* (average of 5) | Pencil Hardness** (average of 2) |
|---|---|---|---|---|
| Susp-A/PC | 1700 | 106.2 | -0.48 | 2H |
| Susp-A/Noryl | 1700 | 96.46 | -0.48 | H |
| Susp-B/PC | 2200 | 98.13 | -1.42 | 3H |
| Susp-C/PC | Not tested | 92.76 | -1.24 | 2H |

| | | | | |
|---|---|---|---|---|
| * Data obtained using a Dr. Schenk PROmeteus MT-146/Blu-ray instrument. ** Data obtained following the ASTM D3363 test method. *** Data obtained on a TA Instrument Cari-Med Rheometer CSL2500. | | | | |

These data indicate that the cured coating compositions of Examples 25-27 (Susp-A, Susp-B and Susp-C) performed well in the tilt and pencil hardness tests.

### Example 30

A disc was prepared as in the previous examples by spincoating a curable coating composition onto a Noryl^{®} substrate and curing the composition thereon to provide the cover layer of the disc.

The disc was subjected to the following tests:
1. Tilt Test: Heat Shock from Ambient to 70°C.
2. Tilt Test: Life Test, 96 Hrs. at 80°C and 85% Relative Humidity
3. Electrical Signal Evaluation (Jitter)

The results of the foregoing tests, set forth in Figs. 1-3, are summarized in Table VI as follows:

**Table 6: Results of Tilt and Electrical Signal Evaluation Tests**

| Test | Fig. | Observation |
|---|---|---|
| 1 | 1 | Disc has excellent heat shock performance. |
| 2 | 2 | Cover layer of disc shows excellent life test tilt performance. |
| 3 | 3 | Cover layer of disc shows good jitter performance. |

While the invention has been described with reference to certain embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out the process of the invention, but that the invention will include all embodiments falling within the scope of the appended claims.

## Claims

1. A curable composition which comprises :
a) silane-functionalized colloidal silica;
b) at least one curable monomer selected from the group consisting of aliphatic cyclic acrylate, urethane diacrylate and epoxy resin; and,
c) at least one curing agent for curable monomer (b)
wherein the epoxy resin is combined with one or more monofunctional and/or multifunctional alcohols which contain an oxetane ring

2. The curable composition of Claim **1** wherein one of the following (i)-(xiii):
(i) the silane-functionalized colloidal silica is obtained from the reaction of colloidal silica with at least one functionalizing silane; or
(ii) the silane-functionalized colloidal silica is obtained by reacting colloidal silica with an acrylate silane and/or an epoxysilane; or
(iii) at least two different functionalized silicas are present therein; or
(iv) the functionalizing silane possesses the general formula
(R¹)ₐSi(OR²)₄₋ₐ
wherein each R¹ is, independently, a monovalent hydrocarbon radical of up to 18 carbon atoms which can contain chemically reactive functionality, and each R² is, independently, a monovalent hydrocarbon radical of up to 18 carbon atoms and a is a whole number from **1** to 3; or
(v) the functionalized silane is at least one silane selected from the group consisting of phenyltrimethoxysilane, methyltrimethoxysilane, vinyltrimethoxysilane, allyidialkylsilane, beta-substituted allylsilane, 2-(3,4-epoxycyclohexyl)-ethyltrimethoxysilane, 3-glycidoxypropyltrimethoxysilane, 3-acryloxypropyl- methyldiethoxysilane, 3-acryloxyproplymethyldimethoxysilane, 3-acryloxypropyl-trimethoxysilane, 2-methacryloxethylmethyldisthoxysilane, 2-methacryloxyethyl-methyldimethoxysilane, 2-methacryloxethyltrimethoxysilane, 2, acryloxyethyl-trimethoxysilane, 3-methytacryloxypropyl, 3-methacryloxypropyltriethoxysilane, 3-acryloxypropyltriethoxysilane, 3-acryloxypropyldimethylethoxysilane, 2-metha-cryloxyethyltriethoxysliane and 2-acryloxythyltriethoxysilane; or
(vi) the nominal median particle size of the colloidal silica is in the range of from about 1-250 nm; or
(vii) the nominal median particle size of the colloidal silica does not exceed about 50 nm; or
(viii) the nominal median particle size of the colloidal silica does not exceed about 25 nm; or
(ix) the aliphatic cyclic acrylate possesses at least two acrylate functionalities and the epoxy resin possesses at least two epoxide functionalities; or
(x) the aliphatic cyclic acrylate is at least one of a monocyctic, bicyclic or tricyclic acrylate; or
(xi) the urethane diacrylate monomer is the reaction product of an isocyanate-terminated polyurethane derived from a polyether or polyester diol and a hydroxyl-terminated acrylate and, optionally, contains an acrylate diluent having a viscosity that is lower than that of the urethane diacrylate; or
(xii) the epoxy resin monomer is combined with an alcohol; or
(xiii) the composition is cured and adhered to at least a portion of a surface of a substrate of an article.

3. The curable composition of Claim 2, part (iii) wherein at least one functionalized colloidal silica is obtained by reacting colloidal silica with an acrylate silane and another functionalized colloidal silica is obtained by reacting colloidal silica with an epoxysilane.

4. The curable composition of Claim 2, part (iv) wherein the chemically reactive functionality is acrylate and/or epoxide functionality.

5. The curable composition of Claim 2, part (i) wherein the colloidal silica is reacted with from about 5 to about 60 weight percent thereof of functionalized silane.

6. The curable composition of Claim 2, part (x) wherein
(a) the aliphatic cyclic acrylate monomer is represented by the formula: 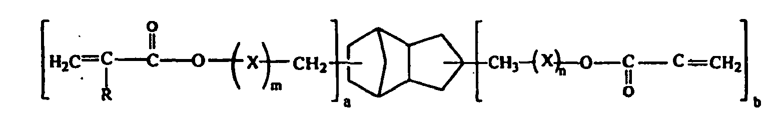 wherein R can be H or alkyl of from 1 to 4 carbon atoms, a is 1 to 3, b is 1 to 3, m is 0 to 6, n is 0 to 6 and X is a spacer group selected from one or more of the following: 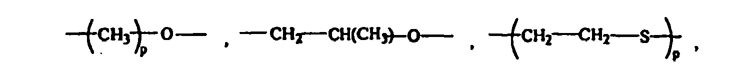 or derivatives there in which p is 1 to 4; or
(b) the aliphatic cyclic acrylate is at least one member selected from the group consisting of cyclohexylacrylate, cyclohexylmethacrylate, cyclohexyldiacrylate, cyclohexyldimethacrylate, norbornyl acrylate, norbornyl methacrylate, norbornyl methacrylate and norbornyl dimethacrylate.

7. The curable composition of Claim 6, part (a) wherein the aliphatic cyclic acrylate monomer is represented by the formula 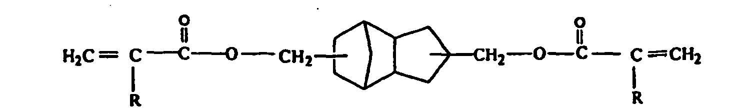 wherein each R is H or -CH₃.

8. The curable composition of Claim 7 wherein the urethane diacrylate is an aliphatic urethane diacrylate, optionally diluted with a viscosity-reducing amount of acrylate to provide a viscosity of the mixture of from about 50 to about 10,000 cps at 25°C.

9. The curable composition of Claim 2, part (ix) wherein the curable multifunctional epoxy resin monomer is at least one member selected from the group consisting of glycidyl esters of mono- and dicarboxylic acids, alkyl glycidyl ethers such as butyl glycidyl ether, phenylglycidyl ether, 2-ethylhexyl glycidyl ether, 3-cyclohexenylmethyl-3-cyclohexenylcarboxylate diepoxide, 2-(3,4-epoxy)cyclohexyl-5,5-spiro-(3,4-epoxy)cyclohexane-m-dioxane, 3,4-epoxycyclohexylmethyl-3,4-epoxycyclohexane-carboxylate, 3,4-epoxy-6-methycyclohexylmethyl-3,4-epoxy-6-methylcyclohexane-carboxylate, vinyl cyclohexanedioxide, bis(3,4-epoxycyclohexylmethyl)adipate, bis(3,4-epoxy-6-methylcyclohexylmethyl)adipate, exo-exo bis(2,3-epoxycyclopentyl) ether, endo-exo bis(2,3-epoxycyclopentyl) ether, 2,2-bis(4-(2,3-epoxypropoxy)-clohexyl)propane, 2,6-bis(2,3-epoxypropoxycyclohexyl-p-dioxane), 2,6-bis(2,3-epoxypropoxy)norbornene, the diglycidylether of linoleic acid dimer, limonene dioxide, 2,2-bis(3,4-epoxycyclohexyl)propane, dicyclopentadiene dioxide, 1,2-epoxy-6-(2,3-epoxypropoxy)hexahydro-4,7-methanoindane, p-(2,3-epoxy)cyclopentylphenyl-2,3-epoxypropylether, 1-(2,3-epoxypropoxy)phenyl-5,6-epoxy-hexadydro-4,7-methanoindane, o-(2,3-epoxy)cyclopentylphenyl-2,3-epoxypropyl ether), 1,2-bis(5-(1,2-epoxy)-4,7-hexahydromethanoindanoxyl)ethane, cyclopentenylphenyl glycidyl ether, cyclohexanediol diglycidyl ether, diglycidyl hexahydrophthalate, diglycidyl ethers of bisphenol A and bisphenol F, alkyl glycidyl ethers; alkyl- and alkenyl-glycidyl esters; alkyl-, mono- and poly-phenol glycidyl ethers; polyglycidyl ethers of pyrocatechol, resorcinol, hydroquinone, 4,4'-dihydroxydiphenyl methane, 4,4'-dihydroxy-3,3'-dimethyldiphenyl methane, 4,4'-dihydroxydiphenyl dimethyl methane, 4,4'-dihydroxydiphenyl methyl methane, 4,4'-dihydroxydiphenyl cyclohexane, 4,4'-dihydroxy-3,3'-dimethyldiphenyl propane, 4,4'-dihydroxydiphenyl sulfone, and tris(4-hydroxyphyenyl)methane; polyglycidyl ethers of the chlorination and bromination products of the above-mentioned diphenols; polyglycidyl ethers of novolacs; polyglycidyl ethers of diphenols obtained by esterifying ethers of diphenols obtained by esterifying salts of an aromatic hydrocarboxylic acid with a dihaloalkane or dihalogen dialkyl ether; polyglycidyl ethers of polyphenols obtained by condensing phenols and long-chain halogen paraffins containing at least two halogen atoms; phenol novolac epoxy resin; cresol novolac epoxy resin and sorbitol glycidyl ether.

10. The curable composition of Claim 2, part (xii) wherein
(a) the alcohol is a multifunctional alcohol; or
(b) the alcohol is a hydroxyl-containing oxetane.

11. The curable composition of Claim 10, part (b) wherein the oxetane is at least one member selected from the group consisting of 3-hydroxymethyl-3-methyloxetane, 3-hydroxymethyl-3-ethyloxetane, 3-hydroxymethyl-3-amyloxetane, 3-hydroxymethyl-3-phenoxymethyloxetane, 3-hydroxymethyl-3-p-tert.-butyl-phenoxymethyloxetane, 3-hydroxymethyl-3-octyloxetane and 3-hydroxymethyl-3-benzyloxetane.

12. The composition of any of Claims 1, 2, parts (iv), (ix), (x), (xi) or (xii), 4 or 9 and which is cured.

13. The Composition of Claim 2, wherein in part (xiii)
the substrate of an article is at least one of synthetic polymer, metal, metal alloy, glass, ceramic or wood; or
the article is an optical information storage medium; or
the article is a Blu-ray Disc.

## Patentansprüche

1. Aushärtbare Zusammensetzung, die umfasst:
a) silanfunktionalisiertes kolloidales Siliciumdioxid;
b) mindestens ein aushärtbares Monomer, das ausgewählt ist aus der Gruppe, bestehend aus aliphatischem cyclischem Acrylat, Urethandiacrylat und Epoxyharz; und
c) mindestens ein Aushärtungsmittel für das aushärtbare Monomer (b),
wobei das Epoxyharz mit einem oder mehreren monofunktionellen und/oder multifunktionellen Alkoholen, die einen Oxetanring enthalten, kombiniert ist.

2. Aushärtbare Zusammensetzung nach Anspruch 1, wobei einer der folgenden Punkte (i)-(xiii) gilt:
(i) das silanfunktionalisierte kolloidale Siliciumdioxid wird aus der Umsetzung von kolloidalem Siliciumdioxid mit mindestens einem funktionalisierenden Silan erhalten; oder
(ii) das silanfunktionalisierte kolloidale Siliciumdioxid wird durch Umsetzen von kolloidalem Siliciumdioxid mit einem Acrylatsilan und/oder einem Epoxysilan erhalten; oder
(iii) mindestens zwei verschiedene funktionalisierte Siliciumdioxide liegen darin vor; oder
(iv) das funktionalisierende Silan weist die allgemeine Formel
(R¹)ₐSi(OR²)₄₋ₐ
auf, wobei jedes R¹ unabhängig ein einwertiger Kohlenwasserstoffrest mit bis zu 18 Kohlenstoffatomen ist, der eine chemisch reaktive Funktionalität enthalten kann, und jedes R² unabhängig ein einwertiger Kohlenwasserstoffrest mit bis zu 18 Kohlenstoffatomen ist und a eine ganze Zahl von 1 bis 3 ist; oder
(v) das funktionalisierte Silan mindestens ein Silan ist, das ausgewählt ist aus der Gruppe, bestehend aus Phenyltrimethoxysilan, Methyltrimethoxysilan, Vinyltrimethoxysilan, Allydialkylsilan, beta-substituiertem Allylsilan, 2-(3,4-Epoxycyclohexyl)ethyltrimethoxysilan, 3-Glycidoxypropyltrimethoxysilan, 3-Acryloxypropylmethyldiethoxysilan, 3-Acryloxypropylmethyldimethoxysilan, 3-Acryloxypropyltrimethoxysilan, 2-Methacryloxyethylmethyldiethoxysilan, 2-Methacryloxyethylmethyldimethoxysilan, 2-Methacryloxyethyltrimethoxysilan, 2-Acryloxyethyltrimethoxysilan, 3-Methylacryloxypropyl, 3-Methacryloxypropyltriethoxysilan, 3-Acryloxypropyltriethoxysilan, 3-Acryloxypropyldimethylethoxysilan, 2-Methacryloxyethyltriethoxysilan und 2-Acryloxyethyltriethoxysilan; oder
(vi) die nominale mittlere Teilchengröße des kolloidalen Siliciumdioxids liegt im Bereich von etwa 1 bis 250 nm; oder
(vii) die nominale mittlere Teilchengröße des kolloidalen Siliciumdioxids ist nicht größer als etwa 50 nm; oder
(viii) die nominale mittlere Teilchengröße des kolloidalen Siliciumdioxids ist nicht größer als etwa 25 nm; oder
(ix) das aliphatische cyclische Acrylat weist mindestens zwei Acrylatfunktionalitäten auf und das Epoxyharz weist mindestens zwei Epoxidfunktionalitäten auf; oder
(x) das aliphatische cyclische Acrylat ist mindestens eines von einem monocyclischen, bicyclischen oder tricyclischen Acrylat; oder
(xi) das Urethandiacrylatmonomer ist das Reaktionsprodukt eines von einem Polyether- oder Polyesterdiol abgeleiteten Polyurethans mit endständigen Isocyanatgruppen und eines Acrylats mit endständigen Hydroxygruppen und enthält wahlweise ein Acrylat-Verdünnungsmittel mit einer Viskosität, die niedriger als diejenige des Urethandiacrylats ist; oder
(xii) das Epoxyharzmonomer wird mit einem Alkohol kombiniert; oder
(xiii) die Zusammensetzung wird ausgehärtet und zumindest an einen Teil einer Oberfläche eines Substrats eines Gegenstandes geklebt.

3. Aushärtbare Zusammensetzung nach Anspruch 2, Teil (iii), wobei mindestens ein funktionalisiertes kolloidales Siliciumdioxid durch Umsetzen von kolloidalem Siliciumdioxid mit einem Acrylatsilan erhalten wird und ein anderes funktionalisiertes kolloidales Siliciumdioxid durch Umsetzen von kolloidalem Siliciumdioxid mit einem Epoxysilan erhalten wird.

4. Aushärtbare Zusammensetzung nach Anspruch 2, Teil (iv), wobei die chemisch reaktive Funktionalität eine Acrylat- und/oder Epoxidfunktionalität ist.

5. Aushärtbare Zusammensetzung nach Anspruch 2, Teil (i), wobei das kolloidale Siliciumdioxid mit etwa 5 bis etwa 60 Gew.-% davon des funktionalisierten Silans umgesetzt ist.

6. Aushärtbare Zusammensetzung nach Anspruch 2, Teil (x), wobei
(a) das aliphatische cyclische Acrylatmonomer dargestellt ist durch die Formel 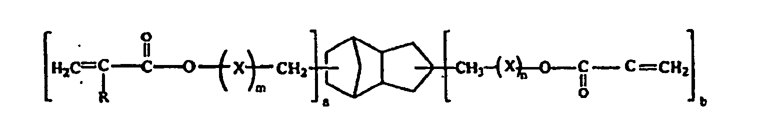 wobei R H oder ein Alkyl mit 1 bis 4 Kohlenstoffatomen sein kann, a 1 bis 3 ist, b1 bis 3 ist, m 0 bis 6 ist, n 0 bis 6 ist und X eine Abstandshaltergruppe ist, die ausgewählt ist aus einem oder mehreren von Folgendem: 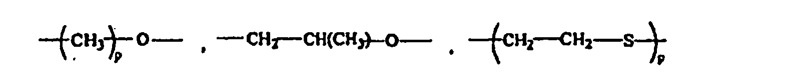 oder Derivaten davon, wobei p 1 bis 4 ist; oder
(b) das aliphatische cyclische Acrylat mindestens ein Mitglied ist, das ausgewählt ist aus der Gruppe, bestehend aus Cyclohexylacrylat, Cyclohexylmethacrylat, Cyclohexyldiacrylat, Cyclohexyldimethacrylat, Norbomylacrylat, Norbomylmethacrylat, Norbornylmethacrylat und Norbornyldimethacrylat.

7. Aushärtbare Zusammensetzung nach Anspruch 6, Teil (a), wobei das aliphatische cyclische Acrylatmonomer dargestellt ist durch die Formel 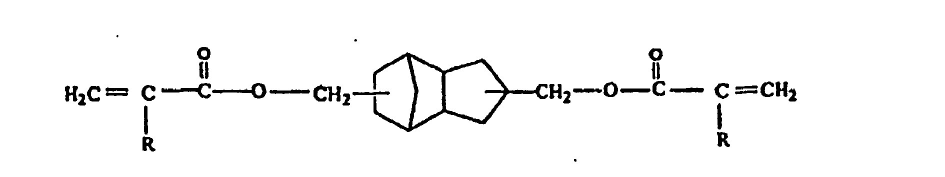 wobei jedes R H oder -CH₃ ist.

8. Aushärtbare Zusammensetzung nach Anspruch 7, wobei das Urethandiacrylat ein aliphatisches Urethandiacrylat ist, das wahlweise mit einer viskositätsreduzierenden Menge eines Acrylats verdünnt ist, um eine Viskosität des Gemischs von etwa 50 bis etwa 10.000 cps bei 25°C bereitzustellen.

9. Aushärtbare Zusammensetzung nach Anspruch 2, Teil (ix), wobei das aushärtbare multifunktionelle Epoxyharzmonomer mindestens ein Mitglied ist, das ausgewählt ist aus der Gruppe, bestehend aus Glycidylestem von Mono- und Dicarbonsäuren, Alkylglycidylethern wie Butylglycidylether, Phenylglycidylether, 2-Ethylhexylglycidylether, 3-Cyclohexenylmethyl-3-cyclohexenylcarboxylatdiepoxid, 2-(3,4-Epoxy)cyclohexyl-5,5-spiro(3,4-epoxy)cyclohexan-m-dioxan, 3,4-Epoxycyclohexylmethyl-3,4-epoxycyclohexancarboxylat, 3,4-Epoxy-6-methylcyclohexylmethyl-3,4-epoxy-6-methylcyclohexancarboxylat, Vinylcyclohexandioxid, Bis(3,4-epoxycyclohexylmethyl)adipat, Bis(3,4-epoxy-6-methylcyclohexylmethyl)adipat, Exo-exo-bis(2,3-epoxycyclo-pentyl)ether, Endo-exo-bis(2,3-epoxycyclopentyl)ether, 2,2-Bis(4-(2,3-epoxypropoxy)cyclohexyl)propan, 2,6-Bis(2,3-epoxypropoxycyclohexyl-p-dioxan), 2,6-Bis(2,3-epoxypropoxy)norbornen, dem Glycidylether von Linolsäuredimer, Limonendioxid, 2,2-Bis(3,4-Epoxycyclohexyl)propan, Dicyclopentadiendioxid, 1,2-Epoxy-6-(2,3-epoxypropoxy)hexahydro-4,7-methanoindan, p-(2,3-Epoxy)cyclopentylphenyl-2,3-epoxypropylether, 1-(2,3-Epoxypropoxy)phenyl-5,6-epoxyhexahydro-4,7-methanoindan, o-(2,3-Epoxy)cyclopentylphenyl-2,3-epoxypropylether), 1,2-Bis(5-(1,2-epoxy)-4,7-hexahydromethanoindanoxyl)ethan, Cyclopentenylphenylglycidylether, Cyclohexandioldiglycidylether, Diglycidylhexahydrophthalat, Diglycidylethern von Bisphenol A und Bisphenol F, Alkylglycidylethern; Alkyl- und Alkenylglycidylestern; Alkyl-, Mono- und Polyphenolglycidylethern; Polyglycidylethern von Brenzcatechin, Resorcinol, Hydrochinon, 4,4`-Dihydroxydiphenylmethan, 4,4'-Dihydroxy-3,3 `-dimethyldiphenylmethan, 4,4'-Dihydroxydiphenyldimethylmethan, 4,4'-Dihydroxydiphenylmethylmethan, 4,4'-Dihydroxydiphenylcyclohexan, 4,4'-Dihydroxy-3,3`-dimethyldiphenylpropan, 4,4`-Dihydroxydiphenylsulfon und Tris(4-hydroxyphenyl)methan; Polyglycidylethern der Chlorierungs-und Bromierungsprodukte der vorstehend erwähnten Diphenole; Polyglycidylethern von Novolaks; Polyglycidylethern von Diphenolen erhalten durch Verestern von Ethern von Diphenolen erhalten durch Verestern von Salzen einer aromatischen Hydrocarbonsäure mit einem Dihalogenalkan oder Dihalogendialkylether; Polyglycidylethern von Polyphenolen, die durch Kondensieren von Phenolen und langkettigen mindestens zwei Halogenatome enthaltenden Halogenparaffinen erhalten werden; Phenol-Novolak-Epoxyharz; Cresol-Novolak-Epoxyharz und Sorbitglycidylether.

10. Aushärtbare Zusammensetzung nach Anspruch 2, Teil (xii), wobei
(a) der Alkohol ein multifunktioneller Alkohol ist; oder
(b) der Alkohol ein hydroxyhaltiges Oxetan ist.

11. Aushärtbare Zusammensetzung nach Anspruch 10, Teil (b), wobei das Oxetan mindestens ein Mitglied ist, das ausgewählt ist aus der Gruppe, bestehend aus 3-Hydroxymethyl-3-methyloxetan, 3-Hydroxymethyl-3-ethyloxetan, 3-Hydroxymethyl-3-amyloxetan, 3-Hydroxymethyl-3-phenoxymethyloxetan, 3-Hydroxymethyl-3-p-tert-butylphenoxymethyloxetan, 3-Hydroxymethyl-3-octyloxetan und 3-Hydroxymethyl-3-benzyloxetan.

12. Zusammensetzung nach einem der Ansprüche 1, 2, Teile (iv), (ix), (x), (xi) oder (xii), 4 oder 9, und welche ausgehärtet ist.

13. Zusammensetzung nach Anspruch 2, wobei in Teil (xiii) das Substrat eines Gegenstandes mindestens eines von einem synthetischen Polymer, Metall, Metalllegierung, Glas, Keramik oder Holz ist; oder
der Gegenstand ein optisches Informationsspeichermedium ist; oder
der Gegenstand eine Blu-ray-Disk ist.

## Revendications

1. Composition durcissable, qui comprend :
a) une silice colloïdale silanisée ;
b) au moins un monomère durcissable, choisi dans le groupe comprenant les acrylates cycliques aliphatiques, les diacrylates d'uréthanne et les résines époxydes ; et
c) au moins un agent de durcissement pour le monomère durcissable (b),
la résine époxyde étant combinée à un ou plusieurs mono- et/ou polyalcools qui contiennent un noyau oxétanne.

2. Composition durcissable selon la revendication 1, dans laquelle l'un des points (i)-(xiii) ci-après :
(i) la silice colloïdale silanisée est obtenue par la réaction de silice colloïdale avec au moins un silane de fonctionnalisation ; ou
(ii) la silice colloïdale silanisée est obtenue par réaction de silice colloïdale avec un acrylate-silane et/ou un époxysilane ; ou
(iii) au moins deux silices fonctionnalisées différentes y sont présentes ; ou
(iv) le silane de fonctionnalisation a la formule générale
(R¹)ₐSi (OR²)₄₋ₐ
dans laquelle chaque R¹ représente d'une manière indépendante un radical hydrocarboné monovalent ayant jusqu'à 18 atomes de carbone, qui peut contenir une fonctionnalité chimiquement réactive, et chaque R² représente d'une manière indépendante un radical hydrocarboné monovalent ayant jusqu'à 18 atomes de carbone, et a est un nombre entier de 1 à 3 ; ou
(v) le silane fonctionnalisé est au moins un silane choisi dans le groupe consistant en le phényltriméthoxysilane, le méthyltriméthoxysilane, le vinyltriméthoxysilane, les allyldialkylsilanes, les allylsilanes à substitution bêta, le 2-(3,4-époxycyclohexyl)éthyl-triméthoxysilane, le 3 glycidoxypropyltriméthoxy-silane, le 3-acryloxypropyl-méthyldiéthoxysilane, le 3-acryloxypropylméthyldiméthoxysilane, le 3-acryloxy-propyl-triméthoxysilane, le 2-méthacryloxéthylméthyl-diméthoxysilane, le 2-méthacryloxyéthyl-éthyl-diméthoxysilane, le 2-méthacryloxéthyltriméthoxy-silane, le 2-acryloxyéthyl-triméthoxysilane, le 3-méthacryloxypropyle, le 3-méthacryloxypropyltriéthoxy-silane, le 3-acryloxypropyltriéthoxysilane, le 3-acryloxypropyldiméthyléthoxysilane, le 2-méthacryloxy-éthyltriéthoxysilane et le 2-acryloxyéthyltriéthoxy-silane ; ou
(vi) la granulométrie médiane de la silice colloïdale est comprise dans la plage de 1 à 250 nm ; ou
(vii)la granulométrie médiane nominale de la silice colloïdale ne dépasse pas environ 50 nm ; ou
(viii) la granulométrie médiane nominale de la silice colloïdale ne dépasse pas environ 25 nm ; ou
(ix) l'acrylate cyclique aliphatique possède au moins deux fonctionnalités acrylate, et la résine époxyde possède au moins deux fonctionnalités époxy ; ou
(x) l'acrylate cyclique aliphatique est au moins l'un d'un acrylate monocyclique, bicyclique ou tricyclique ; ou
(xi) le diacrylate d'uréthanne monomère est le produit de la réaction d'un polyuréthanne à terminaison isocyanate qui dérive d'un polyéther- ou d'un polyester-diol et d'un acrylate à terminaison hydroxyle, et en option contient un diluant acrylate ayant une viscosité qui est inférieure à celle du diacrylate d'uréthanne ; ou
(xii) la résine époxyde monomère est combinée à un alcool ; ou
(xiii) la composition est durcie, et on la fait adhérer à au moins une partie d'une surface d'un substrat d'un article.

3. Composition durcissable selon la revendication 2, partie (iii), dans laquelle au moins une silice colloïdale fonctionnalisée est obtenue par réaction de silice colloïdale avec un acrylate-silane, et une autre silice colloïdale fonctionnalisée est obtenue par réaction de silice colloïdale avec un époxysilane.

4. Composition durcissable selon la revendication 2, partie (iv), dans laquelle la fonctionnalité chimiquement réactive est une fonctionnalité acrylate et/ou époxy.

5. Composition durcissable selon la revendication 2, partie (i), dans laquelle la silice colloïdale est mise à réagir avec d'environ 5 à environ 60 % en poids, par rapport à la silice, d'un silane fonctionnalisé.

6. Composition durcissable selon la revendication 2, partie (x), dans laquelle :
a) l'acrylate cyclique aliphatique monomère est représenté par la formule : 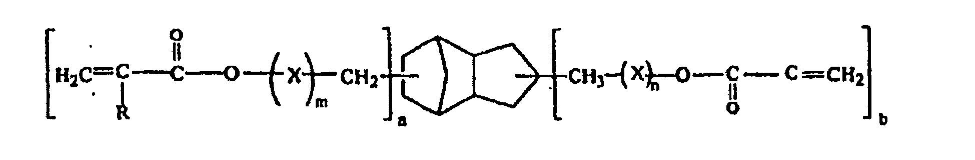 dans laquelle R peut être H ou un radical alkyle ayant 1 à 4 atomes de carbone, a vaut 1 à 3, b vaut 1 à 3, m vaut 0 à 6, n vaut 0 à 6 et X est un groupe espaceur choisi parmi un ou plusieurs des radicaux suivants : 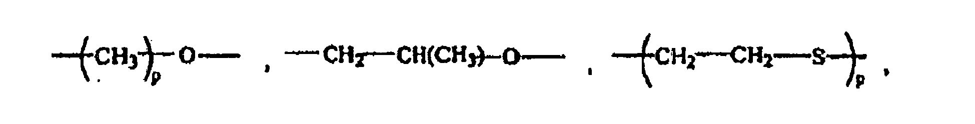 ou leurs dérivés, où p vaut 1 à 4 ; ou
(b) l'acrylate cyclique aliphatique est au moins un membre choisi dans le groupe consistant en l'acrylate de cyclohexyle, le méthacrylate de cyclohexyle, le diacrylate de cyclohexyle, le diméthacrylate de cyclohexyle, l'acrylate de norbornyle, le méthacrylate de norbornyle, le méthacrylate de norbornyle et le diméthacrylate de norbornyle.

7. Composition durcissable selon la revendication 6, partie (a), dans laquelle l'acrylate cyclique aliphatique monomère est représenté par la formule : 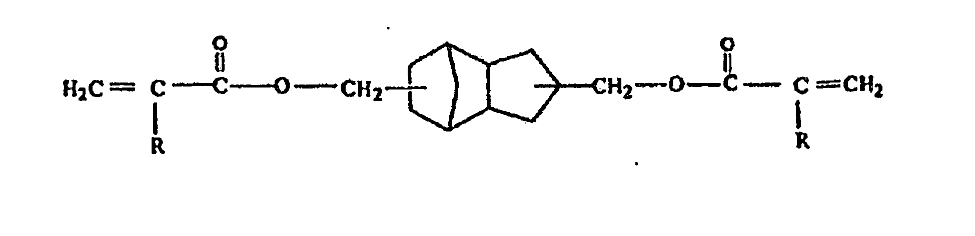 dans laquelle chaque R est H ou CH₃.

8. Composition durcissable selon la revendication 7, dans laquelle le diacrylate d'uréthanne est un diacrylate d'uréthanne aliphatique, en option dilué avec une quantité à effet réducteur de viscosité d'un acrylate, pour donner une viscosité du mélange comprise entre environ 50 et environ 10 000 cP à 25°C.

9. Composition durcissable selon la revendication 2, partie (ix), dans laquelle la résine époxyde multifonctionnelle durcissable monomère est au moins un membre choisi dans le groupe consistant en les esters glycidyliques des acides mono- et dicarboxyliques, les alkylglycidyléthers tels que le butylglycidyléther, le phénylglycidyléther, le 2-éthylhexyl-glycidyléther, le diépoxyde du 3-cyclohexénylcarboxylate de 3-cyclohexényl-méthyle, le 2-(3,4-époxy)cyclohexyl-5,5-spiro-(3,4-époxy)-cyclohexane-m-dioxanne, le 3,4-époxycyclohexanecarboxylate de 3,4-époxycyclohexylméthyle, le 3,4-époxy-6-méthyl-cyclohexanecarboxylate de 3,4-époxy-6-méthylcyclohexyl-méthyle, le dioxyde de vinylcyclohexane, l'adipate de bis(3,4-époxycyclohexylméthyle), l'adipate de bis(3,6-époxy-6-méthylcyclohexylméthyle), l'exo-exo-bis(2,3-époxycyclopentyl)éther, l'endo-exo-bis(2,3-époxy-cyclopentyl)éther, le 2,2-bis(4-(2,3-époxypropoxy)-cyclohexyl)propane, le 2,6-bis(2,3-époxypropoxy-cyclohexyl-p-dioxanne), le 2,6-bis(2,3-époxypropoxy)-norbornène, l'éther diglycidylique de l'acide linoléique dimère, le dioxyde de limonène, le 2,2-bis(3,4-époxycyclohexyl)propane, le dioxyde de dicyclopentadiène, le 1,2-époxy-6-(2,3-époxypropoxy)hexahydro-4,7-méthano-indane, le p-(2,3-époxy)-cyclopentylphényl-2,3-époxy-propyléther, le 1-(2,3-époxypropoxy)phényl-5,6-époxy-hexahydro-4,7-méthanoindane, l'o-(2,3-époxy)cyclopentyl-phényl-2,3-époxypropyléther), le 1,2-bis(5-(1,2-époxy)-4,7-hexahydrométhanoindanoxyl)éthane, le cyclopentényl-phényl-glycidyl-éther, l'éther diglycidylique du cyclohexanediol, l'hexahydrophtalate de diglycidyle, les éthers diglycidyliques du bisphénol A et du bisphénol F, les alkylglycidyléthers ; les esters alkyl- et alcényl- glycidyliques ; les éthers alkylglycidyliques du mono- et du polyphénol ; les éthers polyglycidyliques du pyrocatéchol, du résorcinol, de l'hydroquinone, du 4,4'-dihydroxydiphénylméthane, du 4,4'-dihydroxy-3,3'-diméthyldiphénylméthane, du 4,4'-dihydroxydiphényl-diméthylméthane, du 4,4'-dihydroxydiphénylméthylméthane, du 4,4'-dihydroxydiphénylcyclohexane, du 4,4'-dihydroxy-3,3'-diméthyldiphénylpropane, de la 4,4'-dihydroxydiphényl-sulfone et du tris(4-hydroxyphényl)méthane ; les éthers polyglycidyliques des produits de chloration et de bromation des diphénols mentionnés ci-dessus ; les éthers polyglycidyliques des novolaques ; les éthers polyglycidyliques de diphénols obtenus par estérification d'éthers de diphénols obtenus par estérification de sels d'un acide hydrocarboxylique aromatique avec un dihalogènalcane ou un dihalogénodialkyléther ; les éthers polyglycidyliques de polyphénols obtenus par condensation de phénols et de paraffines halogénées à longue chaîne contenant au moins deux atomes d'halogène ; les résines époxydes novolaques du phénol ; les résines époxydes novolaques du crésol et l'éther glycidylique du sorbitol.

10. Composition durcissable selon la revendication 2, partie (xii), dans laquelle :
(a) l'alcool est un polyalcool ; ou
(b) l'alcool est un oxétanne hydroxylé.

11. Composition durcissable selon la revendication 10, partie (b), dans laquelle l'oxétanne est au moins un membre choisi dans le groupe consistant en le 3-hydroxy-méthyl-3-méthyloxétanne, le 3-hydroxyméthyl-3-éthyl-oxétanne, le 3-hydroxyméthyl-3-amyloxétanne, le 3-hydroxy-méthyl-3-phénoxyméthyloxétanne, le 3-hydroxyméthyl-3-p-tert-butyl-phénoxyméthyloxétanne, le 3-hydroxyméthyl-3-octyloxétanne et le 3-hydroxyméthyl-3-benzyloxétanne.

12. Composition selon l'une quelconque des revendications 1, 2, parties (iv), (ix), (x), (xi) ou (xii), 4 ou 9, et qui est durcie.

13. Composition selon la revendication 2, dans laquelle, dans la partie (xiii),
le substrat d'un article est au moins l'un d'un polymère synthétique, d'un métal, d'un alliage métallique, de verre, d'une céramique ou de bois ; ou
l'article est un support de stockage d'informations optique ; ou
l'article est un disque Blu-ray.
